(19) Europäisches Patentamt / European Patent Office / Office européen des brevets

(11) **EP 1 715 333 B1**

(12) **EUROPÄISCHE PATENTSCHRIFT**

(45) Veröffentlichungstag und Bekanntmachung des Hinweises auf die Patenterteilung:
**28.07.2010  Patentblatt 2010/30**

(51) Int Cl.:
***G01N 27/414*** *(2006.01)*

(21) Anmeldenummer: **06006632.1**

(22) Anmeldetag: **30.03.2006**

(54) **Verfahren zur Signalauslesung an einem gassensitiven Feldeffekttransistor**

Signal detection method at gas sensitive field effect transistor

Procédé de lecture de signal du transistor d'effet de terrain sensible au gaz

(84) Benannte Vertragsstaaten:
**CH DE FR GB IT LI NL**

(30) Priorität: **01.04.2005  DE 102005014777**

(43) Veröffentlichungstag der Anmeldung:
**25.10.2006  Patentblatt 2006/43**

(73) Patentinhaber: **Micronas GmbH**
**79108 Freiburg i. Br. (DE)**

(72) Erfinder:
- **Fleischer, Maximilian**
  **85635 Höhenkirchen (DE)**
- **Lampe, Uwe**
  **21614 Buxtehude (DE)**
- **Meixner, Hans**
  **85540 Haar (DE)**
- **Pohle, Roland**
  **85570 Herdweg (DE)**
- **Schneider, Ralf**
  **80639 München (DE)**
- **Simon, Elfriede**
  **80639 München (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**EP-A- 1 176 418      EP-A- 1 484 605**
**EP-A1- 0 947 829     DE-A1- 4 333 875**

- **GERGINTSCHEW Z ET AL: "The capacitively controlled field effect transistor (CCFET) as a new low power gas sensor" SENSORS AND ACTUATORS B, ELSEVIER SEQUOIA S.A., LAUSANNE, CH, Bd. 36, Nr. 1, Oktober 1996 (1996-10), Seiten 285-289, XP004061082 ISSN: 0925-4005**
- **POHL R ET AL: "Realization of a new sensor concept: emproved ccfet and sgfet type gas sensors in hybrid flip-chip technology" TRANSDUCERS, SOLID-STATE SENSORS, ACTUATORS AND MICROSYSTEMS, 12TH INNATIONAL CONFERENCE ON, 2003, PISCATAWAY, NJ, USA,IEEE, Bd. 1, 9. Juni 2003 (2003-06-09), Seiten 135-138, XP010646487 ISBN: 0-7803-7731-1**

**Beschreibung**

Die Erfindung betrifft ein Verfahren zur verbesserten Signalauslesung an Feldeffekttransistoren, die mit einer gassensitiven Schicht versehen sind. Die äußerst niedrigen Signalpegel bei der Auslesung einer sensitiven Schicht nach dem Prinzip der Austrittsarbeitsänderung, die über Feldeffekttransistoren ausgelesen werden, sollen möglichst geringen Störeinflüssen unterliegen.

Ein solches Verfahren ist z.B. aus EP 1 484 605 A2 bekannt.

Gassensoren, die die Austrittsarbeitsänderung von sensitiven Materialien als physikalische Größe benutzen, weisen wesentliches Entwicklungspotential auf. Gründe hierfür sind deren besonderen Vorteile, die in einer geringen Betriebsenergie, einer kostengünstigen Fertigungs- und Aufbautechnologie sowie in einer breiten Palette von Zielgasen ihren Niederschlag finden. Letztere können mit dieser Plattformtechnologie detektiert werden, da zahlreiche unterschiedliche Detektionssubstanzen in derartige Aufbauten integrierbar sind.

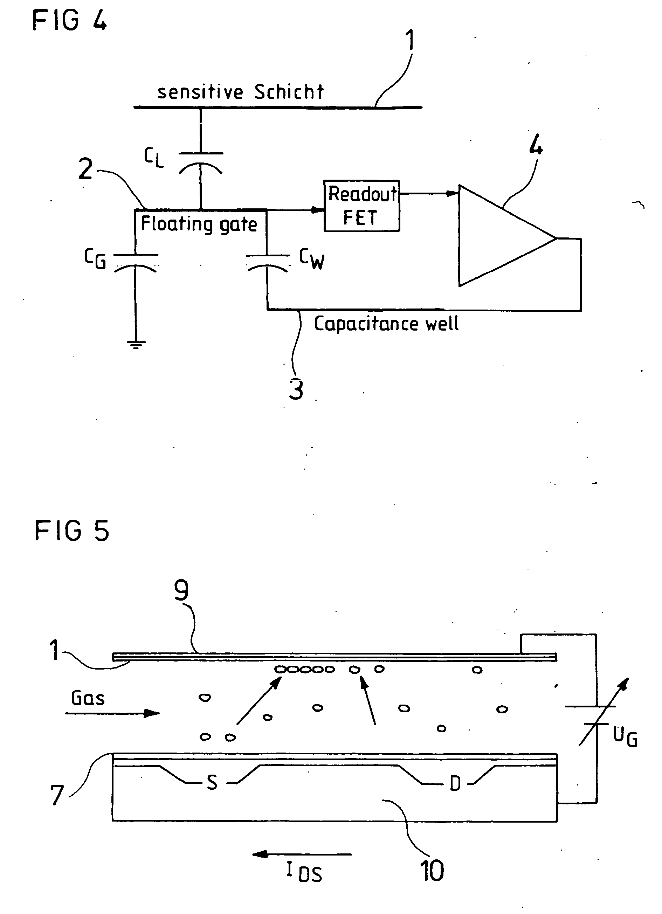

In der Figur 5 ist der Sensoraufbau nach dem Prinzip eines sog. Suspended-Gate-Feldeffekttransistors (SGFET) dargestellt. Die bei diesem Aufbau abgehobene Gate-Elektrode weist an ihren Unterseite die sensitive Schicht auf, an der bei der Präsenz der zu detektierenden Gase aufgrund von Absorption ein elektrisches Potential entsteht, das einer Änderung der Austrittsarbeit des sensitiven Materials entspricht. Die Signale weisen in der Regel einen Pegel von 50 bis 100 mV auf. Dieses Potential wirkt auf den Kanal der FET-Struktur und verändert damit den Strom zwischen Source und Drain ($I_{DS}$). Die Ankopplung dieses Potentials an den Source-Drain-Strom ist von der Gate-Kapazität C sowie vom Quotienten aus Kanalweite zu Kanallänge W/L abhängig:

$$I_{DS} \propto \frac{W}{L} \cdot c \quad \text{(c: flächenspezifische Gatekapazität in F/m}^2 \text{ [1]}$$

Ausgelesen wird der geänderte Source-Drain-Strom direkt. Alternativ wird durch Anlegen einer zusätzlichen Spannung an das abgehobene Gate oder an die Transistorwanne die Änderung des Source-Drain-Stromes zurückgestellt. Die dafür notwendige zusätzliche Spannung stellt das Auslesesignal dar, welches mit der Austrittsarbeitsänderung der sensitiven Schicht direkt korreliert.

Der SGFET weist aufgrund der durch die Dimensionierung der FET-Struktur vorgegebenen Geometrie Einschränkungen in der erreichbaren Signalqualität auf. Die für die Einkopplung zur Verfügung stehende Oberfläche wird durch die prozesstechnische Größe W/L begrenzt. Darüber hinaus wird nach dem oben genannten Zusammenhang die Signalqualität wesentlich durch die Einführung des Luftspaltes zwischen Gate- und Kanalbereich und der damit verbundenen Verringerung der Gate-Kapazität bestimmt. Die Höhe des Luftspaltes muss eine ausreichend schnelle Diffusion des Gases erlauben und liegt bei wenigen $\mu$m.

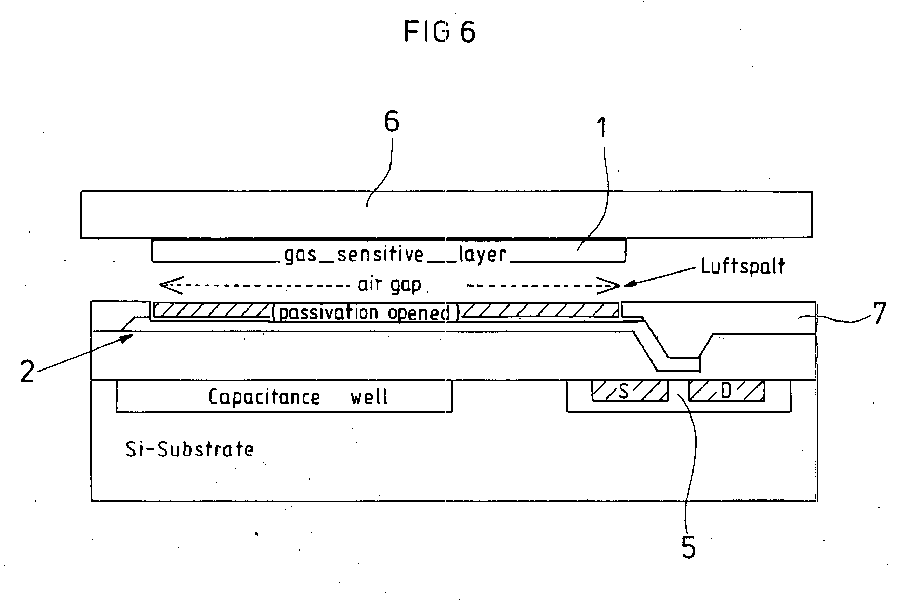

Durch den Einsatz des in Figur 6 dargestellten CCFET-Aufbaus (Capacitively controlled FET) werden die Einschränkungen in Zusammenhang mit einem FGFET zugunsten einer flexibleren Dimensionierbarkeit größtenteils aufgehoben. Dadurch wird eine wesentliche Optimierung hinsichtlich der Signalqualität möglich. IM CCFET wird der Auslesetransistor 5 dargestellt als Source S und Drain D über ein nicht kontaktiertes Gate (floating gate) angesteuert. Das nicht kontaktierte Gate bildet mit der gegenüberliegenden Gateelektrode, die die gassensitive Schicht aufweist, eine Kondensatoranordnung. Die Fläche der Kondensatoranordnung ist unabhängig vom Auslesetransistor und kann damit vergrößert werden, was zu einer besseren Signalankopplung führt.

Es wirkt sich jedoch auch beim CCFET nachteilig aus, dass zwischen dem Floating Gate 2 und dem Substrat 6 bzw. dem Capacitance well 3 befindliche parasitäre Kapazitäten befinden.

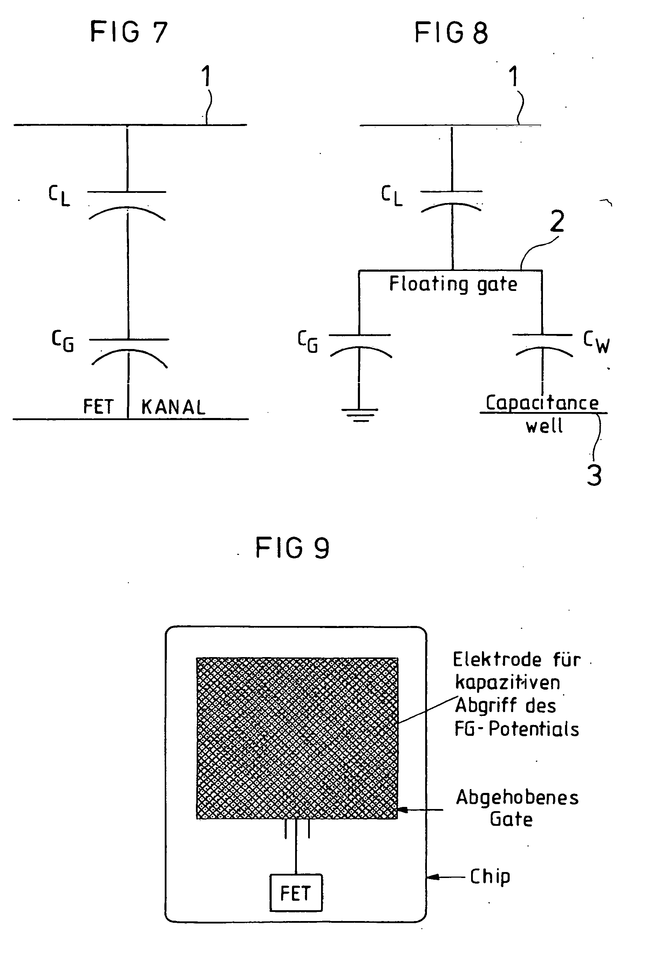

Werden die in einem gassensitiven Feldeffekttransistor vorhandenen Teilkapazitäten in Ersatzschaltbildern verdeutlicht, so können für die Varianten SGFET und CCFET die Schaubilder entsprechend den Figuren 7 und 8 aufgestellt werden. Entsprechend Figur 7 weist der SGFET eine Struktur auf, die aus einer Reihenschaltung der Einzelkapazitäten des Luftspaltes $C_L$ und der des Auslesetransistors $C_G$ bestehen.

$$C_{SGFET} = C_L \cdot C_G/(C_L + C_G).$$

Bei gegebener sensitiver Schicht und bei gegebenem Transistor ist somit die Luftspalthöhe die einzige Variable. In diesem Fall ist eine Verbesserung der Signalankopplung durch eine geeignete elektrische Ansteuerung nicht möglich. Eine CCFET-Struktur, deren kapazitives Einsatzschaltbild in Figur 6 dargestellt ist, beinhaltet eine weitere Elektrode, die sog. Capacitance well 3, die sich unter dem Floating gate 2 befindet. Somit wird das Potential am Floating gate durch einen erweiterten kapazitiven Spannungsteiler bestimmt, der sich aus der Luftspaltkapazität $C_L$, der Kapazität des Gates

$C_G$ und der zwischen dem Floating gate und der durch die vom Capacitance well auftretende Kapazität gebildet wird, wie es in Figur 8 sichtbar ist. Durch Vergrößerung der die Kapazität $C_L$ bildenden Fläche kann bei gleich bleibender Luftspalthöhe der Einfluss der parasitären Gate-Kapazität verringert werden. Die Gate-Kapazität des Auslesetransistors ist, insbesondere bei geeigneter Dimensionierung, in guter Näherung vernachlässigbar gegenüber den anderen Kapazitäten. Das Capacitance well wird zur Abschirmung der floatenden Gate-Elektrode verwendet und ist entsprechend auf Masse gelegt. Unter dieser Voraussetzung ergibt sich für das Potential am Floating gate $U_{FG}$:

$$\Delta U_{FG} = \Delta \Phi_S \cdot C_L \cdot (C_L + C_W + C_G)/(C_G + C_W) \qquad [2]$$

Die Änderungen von $U_{FG}$ werden über die Transistorkennlinie direkt in Änderungen des Source-Drain-Stromes $I_{DS}$ umgesetzt und sind bei gegebenen $\Delta\Phi_s$ direkt ein Maß für das mit dem Gassensor erhaltene Signal. Durch die Einführung des Luftspaltes mit einigen $\mu$m Höhe ergibt sich

$$C_L \ll C_G + C_W \qquad [3]$$

Somit ergibt sich bis hierhin ein starker Signalverlust.

Die beiden Varianten entsprechend der Ersatzschaltbilder in Figur 7 und 8 funktionieren mit der Ankopplung des Gassignals an den beispielhaft als Messgröße verwendeten Source-Drain-Strom $I_{DS}$. Durch vorhandene Kapazitäten wird jedoch das Signal verschlechtert. Dieser Tatsache kann beim SGFET durch Erhöhung von W/L und zusätzlich beim CCFET durch Vergrößerung der Fläche der Auslesekapazität entgegengewirkt werden, so dass im Grenzfall eine sehr große Fläche erhalten wird, womit $C_G \ll C_W$ wird.

$$\Delta U_{FG} \propto \Delta \Phi_S \cdot C_L / C_W \qquad [4]$$

In der bisher beschriebenen Betriebsweise ist unter Verwendung von in einem Standard-CMOS-Prozess möglichen Parameter beim CCFET eine Abschwächung des Signals durch den kapazitiven Spannungsteiler in der Größenordnung von 1:10 bis 1:100 zu erwarten.

Der Erfindung liegt die Aufgabe zugrunde, ein Verfahren zur Auslesung eines gassensitiven Feldeffekttransistors bereitzustellen, welches weitgehend Störeinflüsse eliminiert. Die Lösung dieser Aufgabe geschieht durch die Merkmalskombination entsprechend Patentanspruch 1. Vorteilhafte Ausgestaltungen können den Unteransprüchen entnommen werden.

Der Erfindung liegt die Erkenntnis zugrunde, dass die Beschaltung eines CCFET, in dessen Struktur eine Referenzelektrode/Capacitance Well vorgesehen ist, bei der Auslesung der Austrittsarbeitsänderung gassensitiver Schichten derart erfolgen muss, dass durch entsprechende Schaltmaßnahmen, wie Nachführung von Potentialen bestimmter Elektroden parasitäre Einflüsse von im Aufbau enthaltenen Kapazitäten verringert werden. Dies hat direkte Auswirkung auf die Ankopplung des Signals der gassensitiven Schicht an den Strom $I_{DRAIN/SOURCE}$ und bewirkt somit eine Verstärkung des Signals des Gassensors, um ein bis zwei Größenordnungen.

Die Auswirkungen, dass die nicht kontaktierte Floating-Gate-Elektrode und die Referenzelektrode auf gleiches Potential angepasst bzw. nachgeführt werden, besteht darin, dass parasitäre Kapazitäten, wie beispielsweise die Kapazität $C_W$ zwischen Floating-Gate-Elektrode und Referenzelektrode nicht mehr wirksam sind, so dass sich im Idealfall ausgehend von Gleichung [2] folgendes ergibt:

$$\Delta U_{FG} = \Delta \Phi_S \cdot C_L / (C_G) \quad [5] \quad \gg \quad \Delta \Phi_S \cdot C_L / (C_G + C_W) \text{ in Analogie zu } [2]$$
$$\gg \quad \Delta \Phi_S \cdot C_L / (C_W) \qquad \text{in Analogie zu } [4]$$

Im Folgenden werden anhand von schematischen, die Erfindung nicht einschränkenden Beispielen Ausführungsvarianten beschrieben.

Figur 1        zeigt eine Ausführung eines CCFET mit kapazitiver Ankopplung an das Floating-Gate (2),

Figur 2        zeigt die schematische Darstellung der Nachführung der Referenzelektrode/Capacitance Well (3), kapazitiv entkoppelt, verstärkt und zur Nachführung der Referenzelektrode eingesetzt,

Figur 3        zeigt eine schematische Nachführung der Referenzelektrode, wobei ein mit dem Floating-Gate potentialkorreliertes Signal über eine zusätzliche Elektrode, insbesondere im Luftspalt angeordnet, generierbar ist.

Figur 4        zeigt eine schematische Darstellung der Nachführung der Referenzelektrode über das Ausgangssignal des Auslesetransistors,

Figuren 5      und 6 zeigen schematische Darstellungen bezüglich des Aufbaus von gassensitiven Feldeffekttransistoren, wobei ein CCFET in Figur 6 abgebildet ist,

Figuren 7      und 8 stellen Ersatzschaltbilder von Figur 5 bzw. Figur 6 dar,

Figur 9        zeigt eine Ausführungsform der Erfindung zur Auskopplung des Potentials der Floating-Gate-Elektrode, welche in diesem Fall durch eine ringförmige das Floating-Gate umgebende Elektrode realisiert ist.

Bei einer CCFET-Struktur, beispielsweise entsprechend Figur 6 ist eine entsprechende Referenzelektrode, in der Regel bezeichnet als Capacitance Well 3 im Aufbau enthalten. Diese befindet sich unter der nicht kontaktierten Floating-Gate-Elektrode 2. Somit wird das Potential am Floating-Gate durch einen erweiterten kapazitiven Spannungsteiler bestimmt, der sich aus der Luftspaltkapazität $C_L$, der Kapazität des Gates bzw. der Gateelektrode 9 und der zwischen dem Floating-Gate (2) und der Referenzelektrode 3 auftretenden Kapazität bildet. Die Referenzelektrode 3 dient grundsätzlich dazu, dass Potential der Floating-Gate-Elektrode 2 zu definieren, was durch die Differenz der Potentiale von Gate- und Referenzelektrode geschieht. Entsprechend Gleichung [2] ergibt sich eine Änderung der Spannung an der Referenzelektrode/FG.

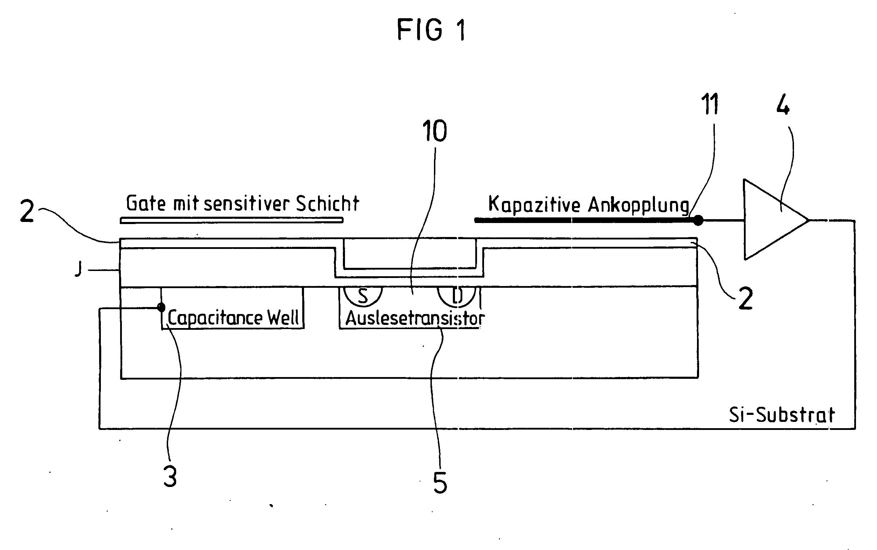

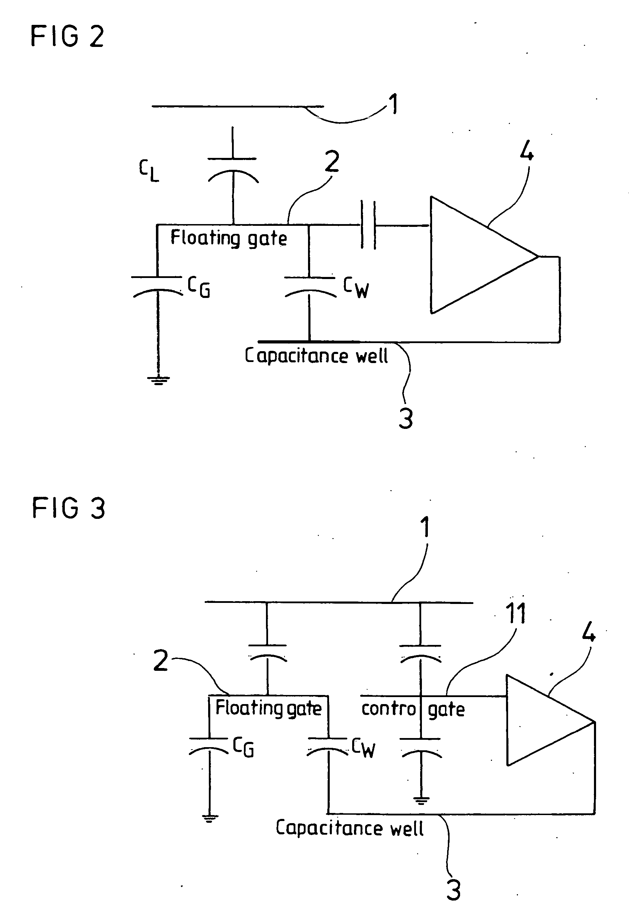

Ausgehend von den Figuren 7 und 8, die entsprechend Figur 7 das Ersatzschaltbild eines SGFET und entsprechend Figur 8 das Ersatzschaltbild eines CCFET darstellen, werden in den Figuren 2, 3 und 4 sowie in Figur 1 Varianten der Erfindung gezeigt. Aufbauend auf dem in den Figuren 5 bis 8 wiedergegebenen Stand der Technik ist erkennbar, dass entsprechend den Figuren 5 und 7 bei einem sog. SGFET keine durch weitere Elektroden beeinflussbare parasitären Einflüsse zwischen der gassensitiven Schicht 1 und dem Kanal des Feldeffekttransistors ergeben. Es sind lediglich die Kapazitäten des Luftspaltes $C_L$ und des Gates $C_G$ vorhanden. Entsprechend der Darstellungen für einen CCFET in den Figuren 6 und 8 ist erkennbar, dass durch die Referenzelektrode/Capacitance Well (3) eine weitere Kapazitäten im Aufbau vorhanden ist, die unter Umständen parasitäre Einflüsse aufweisen kann. Die Kapazität $C_W$ ist zwischen Floating-Gate (2) und Referenzelektrode (3) ausgebildet.

Durch die Nachführung des Potentials der Referenzelektrode (3) wird der parasitäre Einfluss der Kapazität $C_W$ und unter Umständen auch der Einfluss des Substrats, das in der Regel aus Silizium besteht, ausgeschaltet werden. Somit ergibt sich eine Verbesserung der Ankopplung des Gassignals an den Kanalbereich des Transistors und somit eine Verstärkung des Gassensorsignals um mehrere Größenordnungen.

Die drei zur Realisierung der erfindungsgemäßen Methode möglichen Varianten sind in den Figuren 2, 3 und 4, sowie in der Figur 1 dargestellt. Es wird prinzipiell das Potential der Referenzelektrode/Floating-Gate-Elektrode 2 ausgekoppelt und elektrisch entkoppelt zur Steuerung der Referenzelektrode/Capacitance Well 3 herangezogen. Damit werden Verluste durch parasitäre Kapazitäten ausgeglichen, wobei eine zwischenliegende Verstärkung mit einem Verstärker 4, der insbesondere einen hohen Eingangswiderstand aufweist und somit als Spannungsfolger fungiert, ein entsprechender Schaltkreis angesteuert werden. Ziel ist die Nachführung des Potentials der Referenzelektrode auf das Potential der nicht kontaktierten Floating-Gate-Elektrode.

Entsprechend Gleichung [5] kann die Nachführung der Spannung $U_W$ an der Referenzelektrode 3 dadurch geschehen, dass die Spannung $U_{FG}$ an der Floating-Gate-Elektrode 2 kapazitiv ausgekoppelt und elektrisch entkoppelt an die Referenzelektrode angelegt wird.

Diese Auskoppelung der Spannung $U_{FG}$ kann kapazitiv direkt aus der Floating-Gate-Elektrode 2 erfolgen. Alternativ dazu kann eine zusätzliche, beispielsweise im Luftspalt angebrachte Elektrode als Steuerelektrode dienen, wobei Differenzen zwischen den Spannungen $U_{FG}$ und $U_W$ über die Verstärkung des Schaltkreises ausgeglichen werden. Somit ist die Dimensionierung der Steuer-Elektrode 11 nicht fest an die Auslegung der Floating-Gate-Elektrode gebunden.

In Figur 4 wird eine weitere Möglichkeit dargestellt, die Nachführung der Spannung UW im gassensitiven Feldeffekttransistor zu erreichen. Dazu wird die Referenzelektrode 3 über das verstärkte Ausgangssignal des Sensors bzw. des Auslesetransistors erreicht. Dazu wird das Potential der Floating-Gate-Elektrode 2 direkt auf den Auslesetransistor gelegt und dessen Ausgangssignal wiederum auf den Verstärker 4. Das verstärkte Signal wird der Referenzelektrode 3 zugeführt.

Die Vorteile der Erfindung ergeben insgesamt hohe Signalqualitäten der gassensitiven Feldeffekttransistoren, wobei durch verbesserte Ankoppelung der an der gassensitiven Schicht entstehenden Austrittsarbeit an den als Messgröße verwendeten Transistorstrom Störeffekte wie Signaldrift oder Rauschen unterdrückt werden. Weiterhin bewirkt die Vergrößerung der Amplitude des Messsignals eine deutliche Verbesserung des Signal/Rauschabstands. Eine notwendige Auswerte-Elektronik kann durch verbesserte Sensorsignale kostengünstiger ausgelegt werden.

Figur 1 zeigt eine mögliche Ausführungsvariante mit kapazitiver Ankoppelung an die Floating-Gate-Elektrode. Das Signal der Steuerelektrode 11 wird auf den Verstärker 4 gelegt, dessen Ausgangssignal wiederum der Referenzelektrode 3 zuführbar ist.

Entsprechend Figur 9 kann die Auskoppelung des Potentials der Floating-Gate-Elektrode durch eine ringförmige das Floating-Gate insgesamt umgebende Elektrode realisiert werden. In Figur 9 ist ein Chip in der Aufsicht dargestellt, wobei ein Feldeffekttransistor zum Auslesen aufgebracht ist, ein abgehobenes Gate und eine Elektrode für den kapazitiven Abgriff des Potentials an dem zentral positionierten Floating-Gate.

Die zur Elimination parasitärer Komponenten benötigte Elektronik kann vorteilhaft als integrierte Schaltung in den Si-Chip, welcher den FET-Aufbau enthält, integriert sein.

**Patentansprüche**

1.   Verfahren zur Auslesung eines gassensitiven Feldeffekttransistors (FET) mit Luftspalt zwischen einer Gate-Elektrode mit gassensitiver Schicht und einem Auslesetransistor (5) zum Auslesen, bei dem ein an der gassensitiven Schicht bei vorhandenem Zielgas auftretendes Potential über eine nicht kontaktierte Floating-Gate-Elektrode zum Auslesetransistor (5) geführt wird,
     **dadurch gekennzeichnet, dass** das Potential einer Referenzelektrode/Capacitance Well (3), die mit der Floating-Gate-Elektrode eine Kapazität $C_W$ bildet, auf das Potential der Floating-Gate-Elektrode nachgeführt wird, um die Kapazität $C_W$ während der Messung zu eliminieren.

2.   Verfahren nach Anspruch 1, bei dem das Potential der Floating-Gate-Elektrode elektrisch entkoppelt und verstärkt zur Steuerung der Referenzelektrode/Capacitance Well (3) eingesetzt wird.

3.   Verfahren nach Anspruch 2, bei dem die Auskopplung des Potentials der Floating-Gate-Elektrode (2) direkt aus der Floating-Gate-Elektrode (2) erfolgt und der Verstärkung zugeführt wird.

4.   Verfahren nach Anspruch 2, bei dem die Auslesung des Potentials der Floating-Gate-Elektrode (2) über eine zusätzliche in Koppelverbindung mit der Floating-Gate-Elektrode stehende Steuerelektrode (11) geschieht, die mit der Verstärkung verbunden ist.

5.   Verfahren nach Anspruch 1, bei dem die Auskopplung des Potentials der Floating-Gate-Elektrode (2) direkt von dieser auf den Auslesetransistor (5) geführt wird, dessen Ausgangssignal der Verstärkung zugeführt wird, und diese wiederum die Referenzelektrode/Capacitance Well (3) ansteuert.

6.   Gassensitiver Feldeffekttransistor (FET) mit Luftspalt zwischen einer Gate-Elektrode mit gassensitiver Schicht und einem Auslesetransistor (5), wobei der FET eingerichtet ist, ein an der gassensitiven Schicht bei vorhandenem Zielgas auftretendes Potential über eine nicht kontaktierte Floating-Gate-Elektrode (2) zum Auslesetransistor (5) zu führen,
     **dadurch gekennzeichnet, dass** der FET außerdem eingerichtet ist, das Potential einer Referenzelektrode/Capacitance Well (3), die mit der Floating-Gate-Elektrode 82) eine Kapazität $C_W$ bildet, auf das Potential der Floating-Gate-Elektrode (2) nachzuführen, um die Kapazität $C_W$ zu eliminieren, indem der Referenzelektrode/Capacitance Well (3) ein verstärktes, dem Potential der Floating-Gate-Elektrode (2) entsprechendes Signal zugeführt wird.

7.   Gassensitiver Feldeffekttransistor (FET) nach Anspruch 6, bei dem eine elektronische Schaltung zur Eliminierung parasitärer Komponenten in eine Si-Basis eines FET-Chips integriert ist.

8.   Gassensitiver Feldeffekttransistor (FET) nach Anspruch 7, bei dem zur Auslesung eines Potentials der Floating-Gate-Elektrode (2) eine zusätzliche in Koppelverbindung mit der Floating-Gate-Elektrode (2) stehende Steuerelektrode (11) vorgesehen ist, wobei Mittel vorgesehen sind, die eingerichtet sind, das aus der Floating-Gate-Elektrode 82) ausgekoppelte Potential einem Verstärker (4) zuzuführen ein verstärktes Signal auf die Referenzelektrode/Capacitance Well (3) zur Steuerung derselben zu legen.

9. Gassensitiver Feldeffekttransistor (FET) nach Anspruch 7 oder 8, bei dem Mittel vorgesehen sind, die eingerichtet sind, das von der Floating-Gate-Elektrode (2) abgegriffene Potential direkt von dieser auf den Auslesetransistor (5) zu legen, wobei dessen Ausgangssignal dem Verstärker zugeführt ist und das entsprechend verstärkte Signal wiederum auf die Referenzelektrode/Capacitance Well (3) gelegt ist.

## Claims

1. A method of reading out a gas-sensitive field-effect transistor (FET) with an air gap between a gate electrode with a gas-sensitive layer and a read-out transistor (5) for reading out, in which a potential occurring at the gas-sensitive layer when target gas is present is transmitted to the read-out transistor (5) by way of a non-contacted floating-gate electrode, **characterized in that** the potential of a reference electrode / capacitance well (3), which forms a capacitance $C_W$ with the floating-gate electrode, is updated to the potential of the floating-gate electrode in order to eliminate the capacitance $C_W$ during the measurement.

2. A method according to claim 1, in which the potential of the floating-gate electrode is used electrically decoupled and amplified in order to control the reference electrode / capacitance well (3).

3. A method according to claim 2, in which the decoupling of the potential of the floating-gate electrode (2) is carried out directly from the floating-gate electrode (2) and is supplied to the amplification.

4. A method according to claim 2, in which the read-out of the potential of the floating-gate electrode (2) is carried out by way of an additional control electrode (11) which is coupled to the floating-gate electrode (2) and which is connected to the amplification.

5. A method according to claim 1, in which the decoupling of the potential of the floating-gate electrode (2) is transmitted directly from the latter to the read-out transistor (5), the output signal of which is supplied to the amplification, and this in turn controls the reference electrode / capacitance well (3).

6. A gas-sensitive field-effect transistor (FET) with an air gap between a gate electrode with a gas-sensitive layer and a read-out transistor (5), wherein the FET is set up in such a way that a potential occurring at the gas-sensitive layer when target gas is present is to be transmitted to the read-out transistor (5) by way of a non-contacted floating-gate electrode (2), **characterized in that** the FET is additionally set up in such a way that the potential of a reference electrode / capacitance well (3), which forms a capacitance $C_W$ with the floating-gate electrode (2), is updated to the potential of the floating-gate electrode (2) in order to eliminate the capacitance $C_W$ as an amplified signal corresponding to the potential of the floating-gate electrode (2) is supplied to the reference electrode / capacitance well (3).

7. A gas-sensitive field-effect transistor (FET) according to claim 6, in which an electronic circuit for eliminating parasitic components is integrated into an Si-basis of an FET chip.

8. A gas-sensitive field-effect transistor (FET) according to claim 7, in which an additional control electrode (11) which is coupled to the floating-gate electrode (2) is provided for reading out a potential of the floating-gate electrode (2), wherein means are provided which are set up to supply the potential decoupled from the floating-gate electrode (2) to an amplifier (4) to apply an amplified signal to the reference electrode / capacitance well (3) in order to control the latter.

9. A gas-sensitive field-effect transistor (FET) according to claim 7 or 8, in which means are provided which are set up to apply the potential picked up from the floating-gate electrode (2) directly from the latter to the read-out transistor (5), wherein the output signal of the latter is supplied to the amplifier and the signal amplified accordingly is applied to the reference electrode / capacitance well (3).

## Revendications

1. Procédé de lecture de signal d'un transistor à effet de champ (FET) sensible aux gaz, comportant un intervalle d'air entre l'électrode de porte avec sa couche sensible aux gaz et un transistor de lecture (5) pour lire le signal selon lequel le potentiel produit au niveau de la couche sensible au gaz par la présence du gaz à mesurer, est transmis par une électrode de porte flottante sans contact, vers le transistor de lecture de signal (5),
procédé **caractérisé en ce qu'**
on asservit le potentiel d'une électrode de référence/puits de capacité (3) formant une capacité C$_w$ avec l'électrode de porte flottante sur le potentiel de l'électrode de porte flottante pour éliminer la capacité C$_w$ pendant la mesure.

**2.** Procédé selon la revendication 1,
**caractérisé en ce qu'**
on découple électriquement le potentiel de l'électrode de porte flottante et on l'amplifie pour commander l'électrode de référence/puits de capacité (3).

**3.** Procédé selon la revendication 2,
**caractérisé en ce que**
le découplage du potentiel de l'électrode de porte flottante (2) se fait directement à partir de l'électrode de porte flottante (2) pour être amplifié.

**4.** Procédé selon la revendication 2,
**caractérisé en ce que**
l'extraction du potentiel de l'électrode de porte flottante (2) se fait par une liaison d'électrode de commande (11) supplémentaire, en liaison de couplage avec l'électrode de porte flottante, cette électrode étant reliée à l'amplification.

**5.** Procédé selon la revendication 1,
**caractérisé en ce que**
le découplage du potentiel de l'électrode de porte flottante (2) est appliqué directement de celle-ci au transistor de lecture (5) dont le signal de sortie est appliqué à l'amplification et commande de nouveau l'électrode de référence/ puits de capacité (3).

**6.** Transistor à effet de champ (FET) sensible au gaz comportant un intervalle d'air entre une électrode de porte munie d'une couche sensible aux gaz et un transistor de lecture (5),
le transistor (FET) appliquant le potentiel produit dans la couche sensible aux gaz en présence du gaz à mesurer par une électrode de porte flottante (2) non branchée vers le transistor de lecture (5),
**caractérisé en ce que**
le transistor à effet de champ (FET) asservissant en outre le potentiel d'une électrode de référence/puits de capacité (3) formant une capacité C$_w$ avec l'électrode de porte flottante (82) sur le potentiel de l'électrode de porte flottante (2), pour éliminer la capacité C$_w$ en appliquant à l'électrode de référence/puits de capacité (3), un signal amplifié correspondant au potentiel de l'électrode de porte flottante (2).

**7.** Transistor à effet de champ (FET) sensible aux gaz selon la revendication 6,
**caractérisé par**
un circuit électronique pour éliminer les composants parasites intégré dans la base en Si d'une puce FET.

**8.** Transistor à effet de champ (FET) sensible aux gaz selon la revendication 7,
**caractérisé par**
une électrode de commande (11) couplée en outre à l'électrode de porte flottante (2) pour lire le potentiel de l'électrode à porte flottante (2),
des moyens fournissant le potentiel découplé de l'électrode à porte flottante (82) à un amplificateur (4) pour appliquer un signal amplifié à l'électrode de référence/puits de capacité (3) et commander celle-ci.

**9.** Transistor à effet de champ (FET) sensible aux gaz selon la revendication 7 ou 8,
**caractérisé en ce que**
des moyens appliquent directement le potentiel pris sur l'électrode de porte flottante (2) au transistor de lecture (5), dont le signal de sortie est appliqué à l'amplificateur et le signal amplifié correspondant est appliqué à l'électrode de référence/puits de capacité (3).

FIG 1

FIG 2

FIG 3

## FIG 4

sensitive Schicht 1

$C_L$

2 Floating gate → Readout FET → 4

$C_G$     $C_W$

Capacitance well

3

## FIG 5

9

1

Gas →

S     D

7

$U_G$

$I_{DS}$ ←    10

# FIG 6

gas_sensitive_layer

← - - - - - - - - - - air gap - - - - - - - - →

Luftspalt

(passivation opened)

Capacitance well

S    D

Si-Substrate

EP 1 715 333 B1

# FIG 7

$C_L$

$C_G$

FET | KANAL

# FIG 8

1

$C_L$

2

Floating gate

$C_G$

$C_W$

Capacitance
well

3

# FIG 9

Elektrode für
kapazitiven
Abgriff des
FG-Potentials

Abgehobenes
Gate

Chip

FET

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1484605 A2